# EUROPEAN PATENT APPLICATION

(11) **EP 0 556 729 A1**
(43) Date of publication of application: **25.08.1993**
(21) Application number: 93102183.6
(22) Date of filing: 11.02.1993
(51) Int. Cl.: C08G 18/62, C09D 175/04, C09D 127/12

(54) **Powder paint composition and method of preparing same**

(30) Priority: 18.02.1992 JP 30855/92
(71) Applicant: CENTRAL GLASS COMPANY, LIMITED, Ube-city Yamaguchi-pref. (JP)
(72) Inventor: Yasumura, Takashi, Fujimi City, Saitama Prefecture (JP); Kobayashi, Satoru, Fuchu City, Tokyo (JP); Komoriya, Haruhiko, Kawagoe City, Saitama Prefecture (JP)
(74) Representative: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(57) **Abstract**

The invention relates to a method of preparing a thermosetting powder paint composition. The method comprising the steps of: (a) mixing a fluorine-containing copolymer having a hydroxyl and a carboxyl with a blocked polyisocyanate such that the molar ratio of isocyanate groups of the blocked polyisocyanate to the total of the hydroxyl and the carboxyl is 0.2:1 to 1:1; (b) kneading the mixture of the fluorine-containing copolymer and the blocked polyisocyanate at a temperature ranging from 20 to 120 ^{o}C; and (c) pulverizing the kneaded mixture of the fluorine-containing copolymer and the blocked polyisocyanate. A coating film of the powder paint composition becomes superior in gloss, mechanical strength, weathering resistance, chemical resistance, stain resistance and corrosion resistance.

## Description

### BACKGROUND OF THE INVENTION

The present invention relates to a powder paint composition and more particularly to a thermosetting fluoro-resin based powder paint composition, and to a method of preparing the same.

From an environmental and/or economic point of view, powder paints have been recently increasingly used. Powder paints are applied to various objects by the electrostatic spray coating method or the fluidized bed powder coating method. In powder paints, fluoro-resin based powder paints have been attracting much attention because they are superior in chemical and weathering resistances. In fluoro-resin based powder paints, thermoplastic fluoro-resins have been mainly used. Examples of thermoplastic fluoro-resins are polyvinylidenefluoride, ethylene-tetrafluoroethylene copolymer, ethylene-chlorotrifluoroethylene copolymer, tetrafluoroethylene-hexafluoropropylene copolymer, tetrafluoroethylene-perfluoroalkyl vinyl ether copolymer. However, as is disclosed in JP A-1-103670 and JP A-2-60968, thermosetting fluoro-resins have been recently proposed to be used in powder paints.

In general, thermosetting resins are lower than thermoplastic resins in molecular weight. Therefore, thermosetting fluoro-resin based powder paints are superior in gloss and hardness of coating film of the same and in pigment dispersibility. Furthermore, coating film of thermosetting fluoro-resin based film can be thinned in thickness, as compared with that of thermoplastic fluoro-resin. Thermosetting fluoro-resin based powder paints are more resistant against light and chemical substances, as compared with thermosetting epoxy, acrylic or polyester resin based powder paints. Therefore, the application of thermosetting fluoro-resin based powder paints to metal objects of buildings and vehicular parts is expected.

### SUMMARY OF THE INVENTION

It is therefore an object of the present invention to provide a thermosetting fluoro-resin based powder paint which is superior in weathering resistance, chemical resistance, stain resistance and corrosion resistance.

It is another object of the present invention to provide an improved method of forming the thermosetting fluoro-resin based powder paint.

According to a first aspect of the present invention, there is provided a method of preparing a thermosetting powder paint composition, the method comprising the steps of:
(a) mixing a fluorine-containing copolymer having a hydroxyl and a carboxyl with a blocked polyisocyanate such that the molar ratio of isocyanate groups of said blocked polyisocyanate to the total of said hydroxyl and said carboxyl is 0.2:1 to 1:1;
(b) kneading the mixture of said fluorine-containing copolymer and said blocked polyisocyanate at a temperature ranging from 20 to 120 ^{o}C; and
(c) pulverizing the kneaded mixture of said fluorine-containing copolymer and said blocked polyisocyanate.

According to a second aspect of the present invention, there is provided a thermosetting powder paint composition which is prepared in accordance with the above method.

In the above method, the hydroxyl of the fluorine-containing copolymer reacts with the isocyanate group of the blocked polyisocyanate so as to form a urethane bond. With this, the fluorine-containing copolymer is third-dimensionally hardened. The carboxyl of the fluorine-containing copolymer serves as a catalyst so as to speed up hardening of the copolymer, and reacts with the isocyanate group of the blocked polyisocyanate so as to form an amido bond.

A powder paint composition according to the invention is stable for a long period at room temperature.

A coating film of the powder paint composition becomes superior in gloss, mechanical strength, weathering resistance, chemical resistance, stain resistance and corrosion resistance.

### DESCRIPTION OF THE PREFERRED EMBODIMENTS

In the invention, the amount of the hydroxyl of the fluorine-containing copolymer which is expressed as hydroxyl value is preferably from 30 to 120 mg KOH per 1g of the copolymer. If hydroxyl value is lower than 30 mg, a coating film will not have desired characteristics. If it is higher than 120 mg, a coating film will be somewhat inferior in weathering resistance and water resistance.

In the invention, the amount of the carboxyl of the fluorine-containing copolymer which is expressed as acid value is preferably from 3 to 20 mg KOH per 1g of the copolymer. If acid value is lower than 3 mg, a coating film will not have a desired characteristic with respect to, for example, abrasion resistance. If it is higher than 20 mg, cross-linking is partially formed during the kneading step in the production of a powder paint. With this, a coating film becomes uneven upon baking.

A fluorine-containing copolymer according to the invention comprises, as essential components (monomers), a fluoroolefin, a fatty acid vinyl ester, a hydroxyalkyl allyl ether and an alkenyl carboxylic acid. Number average molecular weight (reduced to polystylene) of the fluorine-containing copolymer is from 4,000 to 30,000.

Examples of the fluoroolefins are chlorotrifluoroethylene, dichlorodifluoroethylene, tetrafluoroethylene, hexafluoropropylene, vinylidene fluoride, vinyl fluoride, hexafluoroisobutene and perfluoro vinyl ether.

Examples of the fatty acid vinyl esters are vinyl acetate, vinyl propionate, vinyl lactate, vinyl pivalate, vinyl caproate, vinyl caprylate, vinyl caprate, vinyl laurate, vinyl myristate, vinyl palmitate, vinyl stearate, VEOVA-9 and VEOVA-10, which are represented by the following formula (1): 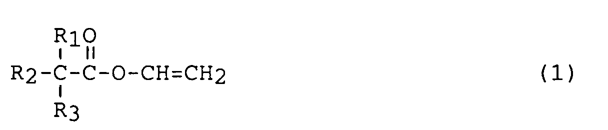
wherein R₁ is H or CH₃, and each of R₂ and R₃ is H or CₙH₂ₙ₊₁ (n is an integer). VEOVA-9 and VEOVA-10 are tradenames of Showa-Shell Chem. Co. for vinyl esters of synthetic monocarboxylic acids having 9 and 10 carbon atoms, respectively.

Examples of the hydroxyalkyl allyl ethers include hydroxyethyl allyl ether, hydroxypropyl allyl ether, hydroxyisopropyl allyl ether and hydroxybutyl allyl ether, which are represented by the following formula (2):

H-(-O-CₙH₂ₙ)ₓ-O-CH₂-CH=CH₂ (2)

wherein n is an integer ranging from 2 to 5, and x is an integer ranging from 1 to 10. Examples of the hydroxyalkyl allyl ethers further include reaction products of the above compounds and lactones, which are represented by the following formula (3): 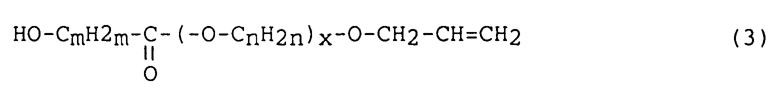
wherein m is an integer ranging from 4 to 8, n is an integer ranging from 2 to 5, and x is an integer.

Examples of the alkenyl carboxylic acids are vinylacetic acid and undecylenic acid which are represented by the following formula (4): 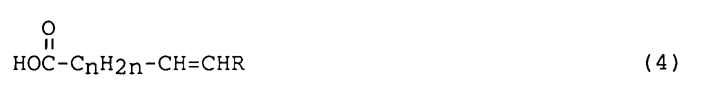
wherein n is an integer ranging from 1 to 10, and R is H or CH₃.

In the invention, it is optional to add acrylic compounds, methacrylic compounds and olefins such as vinyl ether, ethylene and propylene in the preparation of the fluorine-containing copolymer for the purpose of adjusting characteristics of the copolymer.

The above-mentioned four kinds of essential monomers are copolymerized, for example, through solution polymerization, emulsion polymerization or suspension polymerization at a temperature ranging from 30 to 100 ^{o}C in the presence of a radical polymerization initiator. When solution polymerization is used, the obtained copolymer dissolved in a solution is precipitated through a settling agent. Then, the copolymer is separated from the solution, and dried. When emulsion polymerization or suspension polymerization is used, the obtained copolymer is separated from a emulsion or a suspension, washed and dried. The thus obtained copolymer is mixed with a hardener for hardening the copolymer, a pigment, and, if necessary, other additives. The thus obtained mixture is kneaded by an extruder, and then pulverized so as to obtain a powder paint. The thus obtained powder paint is applied to a metal object or the like by, for example, the electrostatic spray coating method. After that, the applied powder paint is baked. With this, the powder paint is melted, leveled and hardened so as to form a firm coating film.

The percentages of the above mentioned four kinds of monomers in the fluorine-containing copolymer is not particularly limited. However, it is preferable to use 25-75 mol % of fluoroolefin, 10-70 mol % of fatty acid vinyl ester, 1-30 mol % of hydroxyalkyl allyl ether and 0.2-10 mol % of alkenyl carboxylic acid.

If the amount of fluoroolefin is too small, the coating film becomes inferior in weathering resistance and chemical resistance. If the amount of fluoroolefin is too large, the coating film becomes superior in hardness but inferior in impact resistance and bending resistance.

If the amount of fatty acid vinyl ester is too small, fluidity of the powder paint upon baking becomes inferior. If the amount of fatty acid vinyl ester is too large, the coating film becomes inferior in weathering resistance and chemical resistance.

The amounts of hydroxyalkyl allyl ether and alkenyl carboxylic acid substantially affect characteristics of the coating film because hydroxyl value and acid value of the copolymer is controlled by them.

Characteristics of the coating film such as hardness and melt fluidity upon baking can be adjusted by specifying the numbers of carbon and hydrogen atoms of the group CₙH₂ₙ of the general formula (2), the group CₙH₂ₙ of the general formula (3) and the following group of the general formula (1). 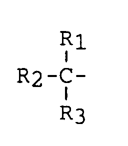
A copolymer according to the invention has a melt viscosity ranging from 1 X 10³ to 1 X 10⁶ poises at a temperature ranging from 20 to 120 ^{o}C and at a shear speed ranging from 1 X 10⁰ to 5 x 10³ sec⁻¹. Therefore, in the invention, a hardener, a pigment and other additives are well dispersed in the copolymer. Furthermore, an even coating film having a superior gloss can be obtained after baking at a temperature not less than 150 ^{o}C.

Examples of the blocked polyisocyanates (hardener) are polyisocyanates such as isophorone diisocyanate, tolylene diisocyanate, xylylene diisocyanate and hexamethylene diisocyanate, which are blocked by blocking agents such as ε-caprolactam, phenol, methyl ethyl ketoxime and benzyl alcohol.

The fluorine-containing copolymer is mixed with the blocked polyisocyanate such that the molar ratio of isocyanate groups of the blocked polyisocyanate to the total of the hydroxyl and the carboxyl of the copolymer is 0.2:1 to 1:1.

If the amount of isocyanate groups is less than 0.2 mol, cross-linking of the copolymer becomes insufficient. With this, the coating film becomes inferior in mechanical strength and adhesion. If the amount of isocyanate groups is higher than 1 mol, the degree of cross-linking of the copolymer becomes too high, thereby lowering bending resistance of the coating film.

The present invention will be illustrated with reference to the following non-limitative examples.

### EXAMPLE 1

A 2-liter stainless steel autoclave provided with an electromagnetic stirrer was charged with 270 g of vinyl acetate, 82 g of hydroxyethyl allyl ether, 8 g of vinylacetic acid, 4.6 g of di-n-propylperoxydicarbonate and 506 g of n-butyl acetate. The gas atmosphere in the autoclave was replaced by nitrogen gas. After that, 576 g of chlorotrifluoroethylene (CTFE) was introduced into the autoclave. Then, the temperature in the autoclave was gradually raised up to 40 ^{o}C, and at this temperature polymerization reaction was carried out for 24 hr. After the reaction, unreacted CTFE was discharged from the autoclave, and the reaction liquid was taken out of the autoclave. Then, the reaction liquid was poured into n-hexane to precipitate the copolymer. Then, the copolymer was pulverized, and repeatedly washed and filtered. After that, the copolymer was subjected to vacuum drying at a temperature of 40 ^{o}C under reduced pressure.

The yield of copolymer was 768 g. Number average molecular weight (reduced to polystyrene) determined by gel permeation chromatography (GPC) method was 21,500. The copolymer contained 28.0 wt% of fluorine, and had a hydroxyl value of 56.0 KOH mg per 1g of copolymer and a acid value of 6.0 KOH mg per 1g of copolymer. The copolymer has a melt viscosity of 3.5 X 10⁴ poises at a temperature of 100 ^{o}C and at a shear speed of 10² sec⁻¹.

The thus obtained copolymer was uniformly mixed with isophorone diisocyanate blocked by ε-caprolactam and a white pigment for about 1 min such that the molar ratio of isocyanate groups of the blocked polyisocyanate to the total of the hydroxyl and the carboxyl was 0.9:1, and such that the weight ratio of the copolymer to the white pigment was 100:40. After that, the mixture was meltingly kneaded by an extruder at a temperature ranging from 80 to 100 ^{o}C. Then, the extruded pellet was pulverized so as to obtain a powder paint having a average particle diameter of not larger than 30 µm.

The thus obtained powder paint was applied to a galvanized iron sheet having a thickness of 0.8 mm by the electrostatic spray coating method. Baking was conducted at a temperature of 190 ^{o}C for 20 min so as to form a coating film on the sheet.

The following Examples 2 and 3 and Comparative Example are modifications of Example 1 with respect to the method of preparing a fluorine-containing copolymer.

### EXAMPLE 2

A 50-liter stainless steel autoclave provided with an electromagnetic stirrer was charged with 4.68 kg of vinyl pivalate, 1.73 kg of vinyl caproate, 4.65 kg of 6-hydroxy-hexanoic acid-2-allyloxy ethyl (ε-caprolacton-modified hydroxyethyl allyl ether), 0.29 kg of undecylenic acid, 0.15 kg of t-butylperoxypivalate, 13.16 kg of n-butyl acetate and 0.07 kg of sodium carbonate. The gas atmosphere in the autoclave was replaced by nitrogen gas. After that, 10.2 kg of CTFE was introduced into the autoclave. Then, the temperature in the autoclave was gradually raised up to 55 ^{o}C, and at this temperature polymerization reaction was carried out for 24 hr. After the reaction, unreacted CTFE was discharged from the autoclave, and the reaction liquid was taken out of the autoclave. Then, the reaction liquid was poured into n-hexane to precipitate the copolymer. Then, copolymer was pulverized, washed and filtered. After that, the copolymer was subjected to vacuum drying at a temperature of 40 ^{o}C under reduced pressure.

The yield of copolymer was 18.24 kg. Number average molecular weight (reduced to polystyrene) determined by GPC method was 11,700. The copolymer had a hydroxyl value of 58.0 KOH mg per 1g of copolymer and a acid value of 6.2 KOH mg per 1g of copolymer. The copolymer has a melt viscosity of 9 X 10³ poises at a temperature of 90 ^{o}C and at a shear speed of 10² sec⁻¹.

A powder paint was prepared with using the thus obtained copolymer in the same manner as that of Example 1. A coating film was formed on a galvanized iron sheet in the same manner as that of Example 1.

### EXAMPLE 3

A 30-liter stainless steel autoclave provided with an electromagnetic stirrer was charged with 1.95 kg of vinyl pivalate, 1.48 kg of VEOVA-9 (boiling point: 185-200 ^{o}C), 1.86 kg of hydroxyisopropyl allyl ether, 0.15 kg of undecylenic acid, 10.89 kg of water, 0.1 kg of methyl cellulose, 0.1 kg of lauroyl peroxide and 0.02 kg of sodium carbonate. The gas atmosphere in the autoclave was replaced by nitrogen gas. After that, 4.67 kg of CTFE was introduced into the autoclave. Then, the temperature in the autoclave was gradually raised up to 60 ^{o}C, and at this temperature polymerization reaction was carried out for 24 hr. After the reaction, unreacted CTFE was discharged from the autoclave, and the reaction slurry was taken out of the autoclave. Then, the reaction slurry was repeatedly centrifuged so as to filtrate and wash the copolymer. After that, the copolymer was subjected to vacuum drying at a temperature of 40 ^{o}C under reduced pressure.

The yield of copolymer was 7.95 kg. Number average molecular weight (reduced to polystyrene) determined by GPC method was 11,100. The copolymer had a hydroxyl value of 80 KOH mg per 1g of copolymer and a acid value of 6.3 KOH mg per 1g of copolymer. The copolymer has a melt viscosity of 5 X 10² poises at a temperature of 100 ^{o}C and at a shear speed of 10² sec⁻¹.

A powder paint was prepared with using the thus obtained copolymer in the same manner as that of Example 1. A coating film was formed on a galvanized iron sheet in the same manner as that of Example 1.

### COMPARATIVE EXAMPLE

In this Comparative Example, alkenyl carboxylic acid was omitted.

A 50-liter stainless steel autoclave provided with an electromagnetic stirrer was charged with 2.68 kg of vinyl acetate, 1.37 kg of hydroxyethyl allyl ether, 0.02 kg of methyl cellulose, 0.17 kg of lauroyl peroxide, 18.15 kg of water and 0.02 kg of sodium carbonate. The gas atmosphere in the autoclave was replaced by nitrogen gas. After that, 6.34 kg of CTFE was introduced into the autoclave. Then, the temperature in the autoclave was gradually raised up to 60 ^{o}C, and at this temperature polymerization reaction was carried out for 24 hr. After the reaction, unreacted CTFE was discharged from the autoclave, and the reaction slurry was taken out of the autoclave. Then, the reaction slurry was repeatedly centrifuged so as to filtrate and wash the copolymer. After that, the copolymer was subjected to vacuum drying at a temperature of 40 ^{o}C under reduced pressure.

The yield of copolymer was 6.63 kg. Number average molecular weight (reduced to polystyrene) determined by GPC method was 21,600. The copolymer had a hydroxyl value of 57.5 KOH mg per 1g of copolymer and a acid value of 0 KOH mg per 1g of copolymer. The copolymer has a melt viscosity of 9 X 10⁴ poises at a temperature of 100 ^{o}C and at a shear speed of 10² sec⁻¹.

A powder paint was prepared with using the thus obtained copolymer in the same manner as that of Example 1. A coating film was formed on a galvanized iron sheet in the same manner as that of Example 1.

### EVALUATION TEST

The baked coating films of Examples 1-3 and Comparative Example were subjected to measurements of the characteristics shown in Table.

The specular gloss (incident angle of 60^{o}) was measured by the method according to JIS-K5400.

Abrasion resistance was tested by rubbing the coating films for 100 times with a piece of gauze moistened with xylene. In Table, "5" means no peeling off of the coating films; and "3" means partial peeling off of the coating films.

The adhesion strength was tested by the cross-cut adhesion test according to JIS-K5400, and the result is indicated by the number of no peel areas among 100 areas tested with cellophane tape.

The scratch resistance was conducted by scratching the coating films with a ten-yen coin. In Table, "5" means no peeling off of the coating films; "4.5" means partial peeling off of the coating films; and "3" means partial exposure of the galvanized iron sheet.

The pencil-scratch test was conducted in accordance with JIS-K5400, and the result is indicated by the maximum hardness of pencil that failed to give scratches and rifts, respectively.

Pliablility of the coating film was tested by T-bend test according to JIS-G3312, and the result is indicated by the minimum diameter of rod on which the galvanized iron sheet coated with the film could be wound without producing cracking and peeling off.

The impact resistance was tested with using the DuPont impact tester in accordance with JIS-K5400. In Table, "5" means no peeling off of the coating film.

The stain resistance was tested by wiping stain caused by oil-based markers. In fact, at first, the coating film was stained by four oil-based markers (black, red, blue and green color markers). After leaving the stained coating film for one day at room temperature, halves of the respective stained areas were masked by cellophane tapes. Then, the other halves of them were wiped off by a tissue paper. The degree of wiping of the other halves as compared with the masked halves was converted into five marks, 1 (worst), 2, 3, 4 and 5 (best). In Table, the results are given in turn with respect to black, red, blue and green color markers.

Weathering resistance was tested by the application of light rays from a metal halide lamp for 1000 hr, and the surface gloss of the coating film was measured before and after this test to indicate the degree of weathering resistance by percentage of the retained gloss.

**Table**

| | Ex. 1 | Ex. 2 | Ex. 3 | Com. Ex. |
|---|---|---|---|---|
| Film Thickness (µm) | 27.5 | 24.2 | 26.3 | 28.7 |
| Gloss (%) | 75.6 | 79.8 | 83.2 | 56.3 |
| Abrasion Resistance | 5 | 5 | 5 | 3 |
| Adhesion Strength | 100/100 | 100/100 | 100/100 | 100/100 |
| Scratch Resistance | 4.5 | 5 | 5 | 3 |
| Pencil Hardness (scratch/rift) | F/4H | HB/3H | B/2H | 3B/H |
| Pliability (mm) | 3 | 2 | 2 | 7 |
| Impact Resistance | 5 | 5 | 5 | 5 |
| Strain Resistance | 5,4,5,5 | 4,4,5,4 | 4,3,5,4 | 4,3,4,3 |
| Weathering Resistance (%) | 93.2 | 95.8 | 98.2 | 78.3 |

## Claims

1. A method of preparing a thermosetting powder paint composition, the method comprising the steps of:
(a) mixing a fluorine-containing copolymer having a hydroxyl and a carboxyl with a blocked polyisocyanate such that the molar ratio of isocyanate groups of said blocked polyisocyanate to the total of said hydroxyl and said carboxyl is 0.2:1 to 1:1;
(b) kneading the mixture of said fluorine-containing copolymer and said blocked polyisocyanate at a temperature ranging from 20 to 120 ^{o}C; and
(c) pulverizing the kneaded mixture of said fluorine-containing copolymer and said blocked polyisocyanate.

2. A method according to Claim 1, wherein said fluorine-containing copolymer has a melt viscosity ranging from 1 X 10³ to 1 X 10⁶ poises at a temperature ranging from 20 to 120 ^{o}C and at a shear speed ranging from 1 X 10⁰ to 5 X 10³ sec⁻¹.

3. A method according to Claim 1, wherein said fluorine-containing copolymer comprises, as essential components, a fluoroolefin, a fatty acid vinyl ester, a hydroxyalkyl allyl ether and an alkenyl carboxylic acid.

4. A method according to Claim 3, wherein said fluoroolefin, said fatty acid vinyl ester, said hydroxyalkyl allyl ether and said alkenyl carboxylic acid amount to 25-75 mol %, 10-70 mol %, 1-30 mol % and 0.2-10 mol %, respectively.

5. A method according to Claim 1, wherein said fluorine-containing copolymer has a hydroxyl value ranging from 30 to 120 mg KOH per 1 g of said copolymer.

6. A method according to Claim 1, wherein said fluorine-containing copolymer has an acid value ranging from 3 to 20 mg KOH per 1 g of said copolymer.

7. A method according to Claim 1, wherein said blocked polyisocyanate is a polyisocyanate blocked by a blocking agent, said polyisocyanate being one selected from the group consisting isophorone diisocyanate, tolylene diisocyanate, xylylene diisocyanate and hexamethylene diisocyanate, said blocking agent being one selected from the group consisting of ε-caprolactam, phenol, methyl ethyl ketoxime and benzyl alcohol.

8. A method according to Claim 7, wherein said polyisocyanate blocked by said blocking agent is isophorone diisocyanate blocked by ε-caprolactam.

9. A method according to Claim 3, wherein said fluoroolefin is one selected from the group consisting of chlorotrifluoroethylene, dichlorodifluoroethylene, tetrafluoroethylene, hexafluoropropylene, vinylidene fluoride, vinyl fluoride, hexafluoroisobutene and perfluoro vinyl ether.

10. A method according to Claim 9, wherein said fluoroolefin is chlorotrifluoroethylene.

11. A method according to Claim 3, wherein said fatty acid vinyl ester is a compound which is represented by the following formula: 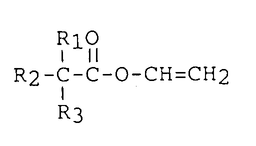 wherein R₁ is H or CH₃, and each of R₂ and R₃ is H or CₙH₂ₙ₊₁ (n is an integer).

12. A method according to Claim 11, wherein said fatty acid vinyl ester is one selected from the group consisting of vinyl acetate, vinyl propionate, vinyl lactate, vinyl pivalate, vinyl caproate, vinyl caprylate, vinyl caprate, vinyl laurate, vinyl myristate, vinyl palmitate and vinyl stearate.

13. A method according to Claim 11, wherein said fatty acid vinyl ester is one selected from the group consisting of a vinyl ester of synthetic monocarboxylic acid having 9 carbon atoms and a vinyl ester of synthetic monocarboxylic acid having 10 carbon atoms.

14. A method according to Claim 12, wherein said fatty acid vinyl ester is vinyl acetate.

15. A method according to Claim 3, wherein said fluorine-containing copolymer further comprises another fatty acid vinyl ester.

16. A method according to Claim 15, wherein said fatty acid vinyl ester is vinyl pivalate, and wherein said another fatty acid vinyl ester is vinyl caproate.

17. A method according to Claim 15, wherein said fatty acid vinyl ester is vinyl pivalate, and wherein said another fatty acid vinyl ester is a vinyl ester of synthetic monocarboxylic acid having 9 carbon atoms.

18. A method according to Claim 3, wherein said hydroxyalkylallyl ether is a compound which is represented by the following formula:
H-(-O-CₙH₂ₙ)ₓ-O-CH₂-CH=CH₂
wherein n is an integer ranging from 2 to 5, and x is an integer ranging from 1 to 10.

19. A method according to Claim 3, wherein said hydroxyalkylallyl ether is a compound which is represented by the following formula: 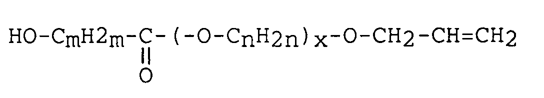 wherein m is an integer ranging from 4 to 8, n is an integer ranging from 2 to 5, and x is an integer.

20. A method according to Claim 18, wherein said hydroxyalkylallyl ether is one selected from the group consisting of hydroxyethyl allyl ether, hydroxypropyl allyl ether, hydroxyisopropyl allyl ether and hydroxybutyl allyl ether.

21. A method according to Claim 20, wherein said hydroxyalkylallyl ether is hydroxyethyl allyl ether.

22. A method according to Claim 19, wherein said hydroxyalkylallyl ether is 6-hydroxyhexanoic acid-2-allyloxy ethyl.

23. A method according to Claim 20, wherein said hydroxyalkylallyl ether is hydroxyisopropyl allyl ether.

24. A method according to Claim 3, wherein said alkenyl carboxylenic acid is a compound which is represented by the following formula: 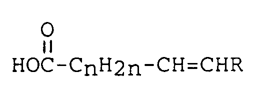 wherein n is an integer ranging from 1 to 10, and R is H or CH₃.

25. A method according to Claim 24, wherein said alkenyl carboxylenic acid is one selected from the group consisting of vinylacetic acid and undecylenic acid.

26. A thermosetting powder paint composition which is prepared in accordance with the method of claim 1.
